# EUROPÄISCHE PATENTSCHRIFT

(11) **EP 1 047 583 B1**
(45) Veröffentlichungstag und Bekanntmachung des Hinweises auf die Patenterteilung: **06.10.2004**
(21) Anmeldenummer: 99948663.2
(22) Anmeldetag: 23.07.1999
(51) Int. Cl.: B60S 1/38

(54) **WISCHBLATT ZUM REINIGEN VON KRAFTFAHRZEUGSCHEIBEN**
WIPER ELEMENT FOR CLEANING MOTOR VEHICLE WINDOWS
RACLETTE D'ESSUIE-GLACE POUR LE NETTOYAGE DE VITRES DE VEHICULES AUTOMOBILES

(30) Priorität: 25.11.1998 DE 19854307
(43) Veröffentlichungstag der Anmeldung: 02.11.2000
(73) Patentinhaber: ROBERT BOSCH GMBH, 70442 Stuttgart (DE)
(72) Erfinder: WEILER, Paul, D-77876 Kappelrodeck (DE); LEUTSCH, Wolfgang, D-77830 Buehlertal (DE)
(86) Internationale Anmeldenummer: PCT/DE1999/002249
(87) Internationale Veröffentlichungsnummer: WO 2000/030906

(56) Entgegenhaltungen:
- EP-A- 0 650 876
- FR-A- 2 689 835
- FR-A- 2 739 338
- US-A- 5 383 249

## Beschreibung

### Stand der Technik

Die Erfindung geht von einem Wischblatt zum Reinigen von Kraftfahrzeugscheiben gemäß den Merkmalen des Oberbegriffs des Patentanspruchs 1 aus wie aus DE-C- 195 28 015 bekannt ist.

Bekannte Scheibenwischer besitzen einen Wischarm, der aus einem auf einer Antriebsachse befestigten Befestigungsteil, einem mit diesem über ein Kniegelenk verbundenes Gelenkteil und aus einer sich an das Gelenkteil starr anschließenden Wischstange aufgebaut ist. Ferner besitzt der Scheibenwischer ein Wischblatt, das ein Tragbügelsystem und eine von diesem gehaltene Wischleiste aufweist. Das Wischblatt ist am Wischarm angelenkt, indem ein hakenförmiges Ende der Wischstange zwischen zwei Seitenwangen des Tragbügelsystems greift und einen Gelenkbolzen umfaßt. Das so gebildete Gelenk führt das Wischblatt mit der Wischleiste über eine Kraftfahrzeugscheibe, wobei das Gelenkteil und das Tragbügelsystem es ermöglichen, daß sich die Wischleiste einer Wölbung der Kraftfahrzeugscheibe anpaßt. Ein erforderlicher Anpreßdruck der Wischleiste auf der Kraftfahrzeugscheibe wird mit. mindestens einer Zugfeder erreicht, die das Befestigungsteil und das Gelenkteil gemeinsam mit der Wischstange über das Kniegelenk verspannt.

Die Wischleiste besteht aus einem Elastomer. Sie hat eine Kopfleiste, die über einen Kippsteg mit einer auf der zu wischenden Scheibe aufliegenden Wischlippe verbunden ist. Durch den Kippsteg kann die Wischleiste im Umkehrpunkt der Wischbewegung in die entgegengesetzte Richtung umklappen, so daß sie stets einen günstigen Winkel zur Windschutzscheibe einnimmt. Wird der Scheibenwischer betätigt, gleitet die Wischleiste mit der Wischlippe über die Kraftfahrzeugscheibe. Während der Fahrt des Kraftfahrzeugs unterströmt ein Fahrtwind den Wischarm und das Wischblatt und erzeugt eine Kraft entgegen der Anpreßkraft der Zugfeder. Insbesondere bei hohen Geschwindigkeiten kann die Anpreßkraft des Wischblatts auf die Windschutzscheibe durch den Fahrtwind soweit reduziert werden, daß das Wischblatt von der Windschutzscheibe abhebt, auf einem Wasserfilm aufschwimmt oder daß die Wischlippe der Wischleiste umgeblasen wird. Dies führt dazu, daß das Wischblatt auf der Windschutzscheibe rattert und die Reinigungsqualität unzureichend ist.

Bekannt ist, auf der Fahrerseite eine Windschaufel in Abwärtswischrichtung vor dem Wischblatt zu befestigen, die den Fahrtwind über das Wischblatt leitet und dabei das Wischblatt auf die Fahrzeugscheibe drückt. Um zu vermeiden, daß die Windschaufel vom Fahrtwind unterströmt wird und dabei Windgeräusche entstehen sowie die Anpreßkraft reduziert wird, sollte die Windschaufel mit einer unteren Kante möglichst nahe an der Windschutzscheibe angeordnet sein. Je kleiner der Abstand der Windschaufel zur Windschutzscheibe ist, desto besser wird der Fahrtwind über das Wischblatt geleitet, um so eher kommt jedoch die Windschaufel mit der Windschutzscheibe in Kontakt, beispielsweise bei verschiedenen aufeinander treffenden Einflußgrößen, wie Spiel zwischen einzelner Bauteile, Verformung einzelner Bauteile durch einen starken Fahrtwind usw.

Aus der DE 195 28 015 C1 ist ein Wischblatt mit einer Windschaufel bekannt, an der ein elastisches Windleitelement befestigt ist, das etwa parallel zur Wischlippe nahe an der Windschutzscheibe angeordnet und so elastisch abgestützt bzw. verformbar ist, daß es bei höheren Fahrgeschwindigkeiten des Kraftfahrzeugs unter dem Fahrtwind zumindest in einem Wischbereich an der Windschutzscheibe anliegt.

Auf das Tragbügelsystem und/oder auf die Windschaufel auftreffendes und haftendes Wasser, wie Regenwasser oder Reinigungsflüssigkeit aus den Spritzdüsen usw., wird häufig beim Wischen durch den Fahrtwind auf eine bereits gewischte Fläche der Windschutzscheibe geblasen und behindert die Sicht.

### Vorteile der Erfindung

Nach der Erfindung ist an einem Tragbügelsystem eines Wischblatts unmittelbar oder mittelbar mindestens eine in Längsrichtung ausgerichtete Fangrinne angeordnet, die Wasser nach außen aus dem Hauptsichtfeld leitet. Auf das Wischblatt auftreffendes und bereits haftendes Wasser wird durch den Fahrtwind in die Fangrinne und innerhalb dieser in Längsrichtung nach außen aus dem Sichtfeld geblasen, und zwar an das beim Wischen nach oben weisende Ende. Das Wasser wird gezielt nach außen abgeführt und bereits gewischte Flächen der Windschutzscheibe bleiben frei von am Wischblatt haftendem Wasser, und die Sicht wird verbessert.

Windschaufeln besitzen eine große geschlossene Oberfläche, auf die größere Mengen an Wasser auftreffen und haften als an einem Tragbügelsystem. Ferner leitet die Windschaufel bei der Abwärtswischbewegung wie bei der Aufwärtswischbewegung den Fahrtwind über das Tragbügelsystem. Insbesondere bei der Abwärtswischbewegung wird Wasser von der Windschaufel auf die gereinigte Windschutzscheibe geblasen. Besonders vorteilhaft ist deshalb zumindest eine Fangrinne an der Windschaufel angeordnet. In erster Linie trifft Wasser auf eine dem Fahrtwind zugewandte Vorderseite. Das Wasser wird durch den Fahrtwind abhängig von der Stellung des Wischers mehr oder weniger in einen oberen, der Scheibe abgewandten Bereich der Windschaufel geblasen. In einer Ausgestaltung der Erfindung ist im oberen Bereich der Windschaufel, möglichst an der obersten Kante die Fangrinne angeordnet bzw. bildet die Fangrinne die oberste Kante der Windschaufel. Je weniger Fläche nach der Fangrinne nach oben verbleibt, um so vollständiger kann das Wasser auf der Windschaufel in die Fangrinne und nach außen geleitet werden und um so weniger Wasser wird von einer noch verbleibenden Fläche oberhalb der Fangrinne auf die bereits gereinigte Windschutzscheibe geblasen.

Teilweise kann Wasser an eine dem Fahrtwind abgewandte Innenseite der Windschaufel gelangen, in erster Linie über eine untere, der Windschutzscheibe zugewandten Kante, beispielsweise beim Wischen durch einen Wasserstrahl einer Spritzwasservorrichtung. Um zu vermeiden, daß das Wasser von der Innenseite auf das Hauptsichtfeld der Windschutzscheibe gelangt, wird vorgeschlagen, zumindest eine Fangrinne auf der Innenseite der Windschaufel anzuordnen. Das Wasser kann im unteren Bereich der Windschaufel und/oder im oberen Bereich der Windschaufel mit einer Fangrinne aufgefangen und nach außen geleitet werden.

In einer Ausgestaltung ist die Fangrinne an einer oberen Kante der Windschaufel, auf der der Scheibe abgewandten Seite angeordnet, die in Richtung Tragbügelsystem über die Innenseite der Windschaufel und in der vom Tragbügelsystem abgewandten Richtung über die Vorderseite der Windschaufel ragt. Vorteilhaft kann mit einer Fangrinne Wasser von der Vorderseite und von der Innenseite aufgefangen und nach außen geleitet werden. Ein zweites zusätzliches Bauteil für eine Fangrinne an der Innenseite wird eingespart..

Die Fangrinne kann am Tragbügelsystem bzw. an der Windschaufel kraftschlüssig, formschlüssig und/oder stoffschlüssig befestigt sein, beispielsweise über eine Steck-, Klemm-, Klebe- und/oder Schweißverbindung. Besonders vorteilhaft ist die Fangrinne jedoch einstückig mit dem Tragbügelsystem und/oder mit der Windschaufel ausgeführt. Zusätzliche Bauteile, Montageschritte und Kosten werden eingespart. Die Fangrinne kann durch einen über die Oberfläche der Windschaufel hinausragenden Vorsprung oder durch eine in die Oberfläche eingebrachte Vertiefung gebildet sein. Mit einer Vertiefung wird Material und Gewicht eingespart. Ferner kann die Windschaufel strömungsgünstig mit geringen Verwirbelungen an der Fangrinne ausgeführt werden.

In einer weiteren Ausgestaltung wird vorgeschlagen, anstatt einer Fangrinne mehrere Fangrinnen in die Oberfläche der Vorderseite der Windschaufel durch Vertiefungen einzubringen. Die Fangrinnen müssen jeweils weniger Wasser nach außen befördern und können dadurch besonders klein und strömungsgünstig ausgeführt werden. Die Fangrinnen können an die Windschaufel beim Gießen angeformt oder später eingebracht werden, beispielsweise durch eine spanende Bearbeitung, mit einer Wärmequelle oder Ultraschallquelle usw.

Um zu vermeiden, daß Wasser vom Fahrtwind aus der Fangrinne geblasen wird, ist die Fangrinne in die von der Scheibe abgewandte Richtung oder in Richtung der Scheibe geschlossen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Wischblatt von oben,
- Fig. 2: einen vergrößerten Ausschnitt eines Wischblatts nach Fig. 1 von der Seite,
- Fig. 3: einen Schnitt entlang der Linie III-III in Fig. 1,
- Fig. 4: ein Wischblatt mit einer Windschaufel von oben,
- Fig. 5: einen vergrößerten Ausschnitt eines Wischblatts nach Fig. 4 von der Seite,
- Fig. 6: einen Schnitt entlang der Linie VI-VI in Fig. 4 und
- Fig. 7, 8, 9: Varianten nach Fig. 6.

### Beschreibung der Ausführungsbeispiele

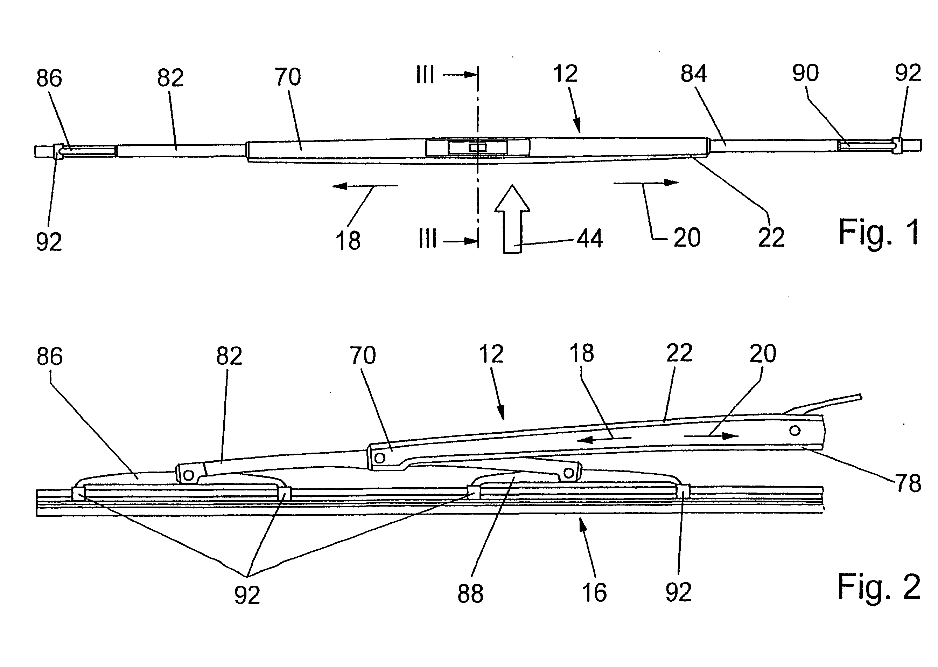

Fig. 1 und 2 zeigt ein Wischblatt, das ein Tragbügelsystem 12 aufweist mit einem Hauptbügel 70, der gelenkig mit Zwischenbügeln 82, 84 verbunden ist, an dessen Enden Krallenbügel 86, 88, 90 angelenkt sind. In Haltekrallen 92 der Krallenbügel 86, 88, 90 ist eine Wischleiste 16 befestigt. Erfindungsgemäß ist am Tragbügelsystem 12, und zwar am Hauptbügel 70 eine in Längsrichtung 18, 20 ausgerichtete Fangrinne 22 angeordnet. Ferner können an den Zwischenbügeln und an den Krallenbügeln Fangrinnen angeordnet sein.

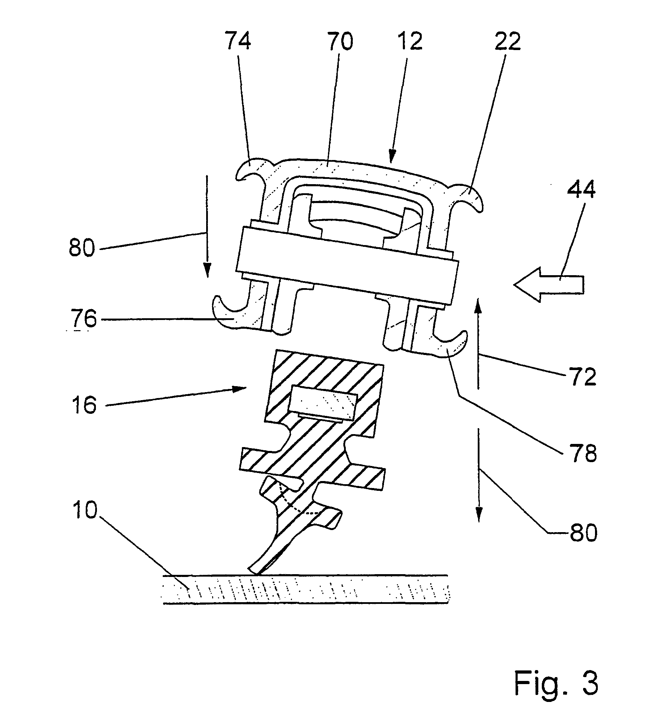

Auf dem Hauptbügel 70 haftendes und auftreffendes Wasser wird durch den Fahrtwind 44 in die Fangrinne 22 und in dieser nach außen aus dem Hauptsichtfeld ans nach oben weisende Ende des Hauptbügels 70 geblasen. Die Fangrinne 22 ist im oberen Bereich, auf der der Windschutzscheibe 10 abgewandten Seite angeordnet und ist in der von der Scheibe 10 abgewandten Richtung 72 geschlossen, daß kein Wasser aus der Fangrinne 22 über das Wischblatt geblasen werden kann (Fig. 3).

Bei einer Wischanlage mit nur einem Wischarm, schwenkt ein Einarmwischer beim Betrieb von einer Seite der Windschutzscheibe 10 über eine Mittelstellung zu einer anderen Seite und wird dabei quer zur Längserstreckung von beiden Seiten gleichermaßen von dem Fahrtwind 44 angeströmt. Insbesondere bei einem Einarmwischer werden vorteilhaft auf beiden Seiten des Hauptbügels 70 Fangrinnen 22, 74 im oberen, dem der Windschutzscheibe 10 abgewandten Bereich angeordnet, wie in Fig. 3 dargestellt. Ferner kann mit im unteren Bereich des Hauptbügels 70 angeordneten, in Richtung 80 geschlossenen Fangrinnen 76, 78 Wasser abgefangen und nach außen aus dem Hauptsichtfeld geleitet werden, das auf dem Hauptbügel 70 in Richtung 80 der Windschutzscheibe 10 strömt, beispielsweise bei einem Einarmwischer in der Abwärtswischbewegung. Die Fangrinnen 22, 74, 76, 78 sind einstückig mit dem Hauptbügel 70 ausgeführt. Zusätzliche Bauteile, Montageschritte und Kosten werden eingespart.

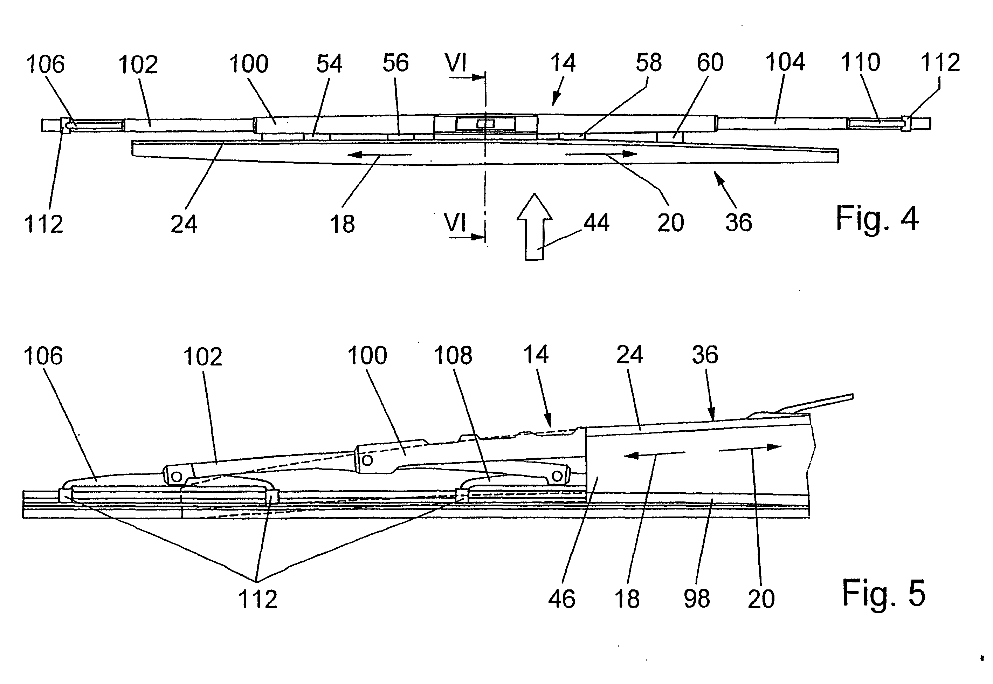

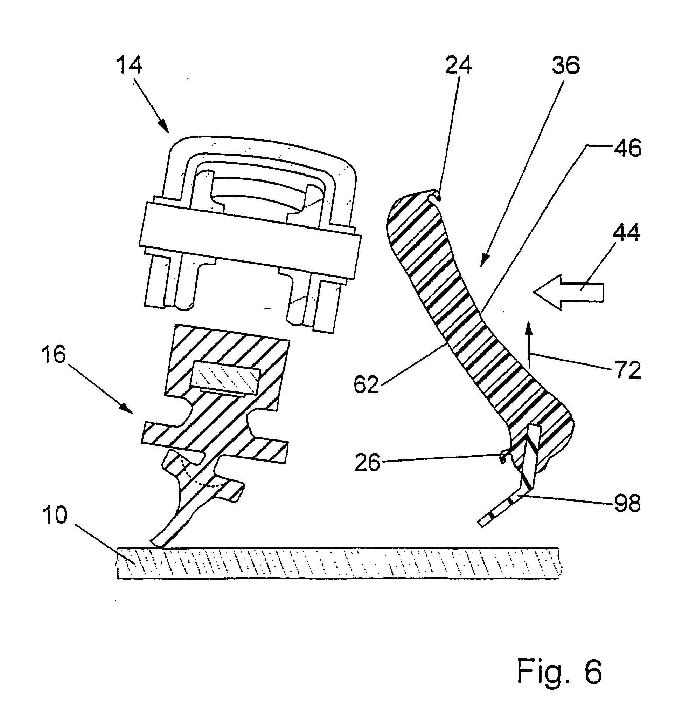

In Fig. 4, 5 und 6 ist ein Wischblatt mit einer Windschaufel 36 dargestellt. Die Windschaufel 36 ist an einem Tragbügelsystem 14 über Befestigungselemente 54, 56, 58, 60 gelagert. Das Tragbügelsystem 14 besitzt einen Hauptbügel 100, Zwischenbügel 102, 104 und Krallenbügel 106, 108, 110 mit Haltekrallen 112. Um ein Auftreffen der Windschaufel 36 auf der Windschutzscheibe 10 weich abzufedern, ist auf der der Windschutzscheibe 10 zugewandten Seite eine elastische Lippe 98 an der Windschaufel 36 befestigt (Fig. 5 und 6). Die Windschaufel 36 erstreckt sich in Längsrichtung 18, 20 nahezu über die vollständige Länge des Wischblatts und deckt dabei das Tragbügelsystem 14 des Wischblatts ab.

Vorzugsweise ist die Windschaufel 36 an einer Scheibenwischanlage mit zwei Wischarmen an beiden oder nur auf der Fahrerseite am Tragbügelsystem 14 befestigt. Bei bekannten Scheibenwischanlagen sind die Wischblätter in ihren Parkstellungen nebeneinander im unteren Bereich auf der Windschutzscheibe 10 angeordnet. Die Wischarme schwenken über eine senkrechte Stellung nicht oder nur geringfügig hinaus und werden dadurch bei ihren Abwärtswischbewegungen und Aufwärtswischbewegungen quer zu ihrer Längserstreckung nur von einer Seite vom Fahrtwind 44 angeströmt. Die Windschaufel 36 ist auf dieser Seite des Wischblatts, in Abwärtswischbewegung vor dem Wischblatt, an diesem befestigt und preßt über den gesamten Wischradius das Wischblatt auf die Windschutzscheibe 10. Grundsätzlich kann eine Windschaufel auch an einem Einarmwischer befestigt sein.

Erfindungsgemäß ist in Längsrichtung 18, 20 der Windschaufel 36 eine Fangrinne 24 im oberen Bereich, auf der der Windschutzscheibe 10 abgewandten Seite, auf einer Vorderseite 46 angeordnet (Fig. 6). Auf der Windschaufel 36 haftendes und auftreffendes Wasser wird durch den Fahrtwind 44 in die Fangrinne 24 und in dieser nach außen aus dem Hauptsichtfeld an das nach oben weisende Ende der Windschaufel 36 geblasen. Die Fangrinne 24 ist in der von der Scheibe 10 abgewandten Richtung 72 geschlossen, daß kein Wasser aus der Fangrinne 24 über das Wischblatt geblasen werden kann (Fig. 6). Ferner ist auf einer Innenseite 62 der Windschaufel 36 im unteren Bereich, auf der der Windschutzscheibe 10 zugewandten Seite eine zweite Fangrinne 26 angeordnet, über die auf die Innenseite 62 gelangtes Wasser nach außen geleitet wird. Die Fangrinne 26 ist wie die Fangrinne 24 in die von der Windschutzscheibe 10 abgewandten Richtung 72 geschlossen, um zu vermeiden, daß Wasser über die Fangrinne 26 und über das Wischblatt auf die gereinigte Windschutzscheibe 10 geblasen wird. Beide Fangrinnen 24, 26 sind einstückig mit der Windschaufel 36 ausgeführt. Zusätzliche Bauteile werden eingespart.

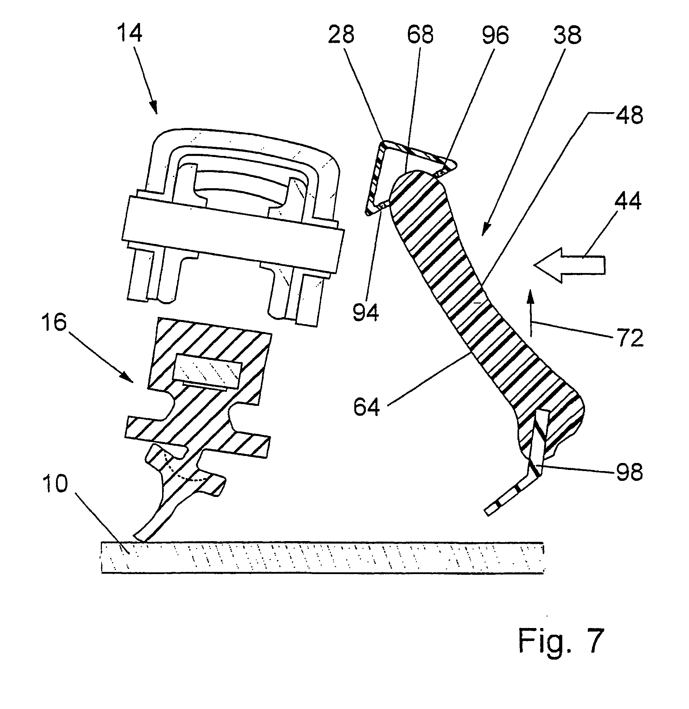

In den Fig. 7, 8 und 9 sind Varianten eines Wischblatts mit einer Windschaufel 38, 40 und 42 und in Längsrichtung 18, 20 (Fig. 5) angeordnete Fangrinnen 28, 30, 32, 34 nach Fig. 6 dargestellt. Gleichbleibende Bauteile sind grundsätzlich mit den gleichen Bezugszeichen beziffert. An einer oberen Kante 68 der Windschaufel 38 ist auf der der Scheibe 10 abgewandten Seite eine Fangrinne 28 aufgesteckt, die in Richtung Tragbügelsystem 14 über die Innenseite 64 der Windschaufel 38 und in der vom Tragbügelsystem 14 abgewandten Richtung über die Vorderseite 48 der Windschaufel 38 ragt (Fig. 7). Auf die Windschaufel 38 auftreffendes und haftendes Wasser wird vom Fahrtwind 44 in Richtung 72 nach oben durch Öffnungen 94, 96 in die Fangrinne 28 geblasen. Vorteilhaft kann mit einer Fangrinne 28 Wasser von der Innenseite 64 und von der Vorderseite 48 nach außen aus dem Hauptsichtfeld geleitet werden.

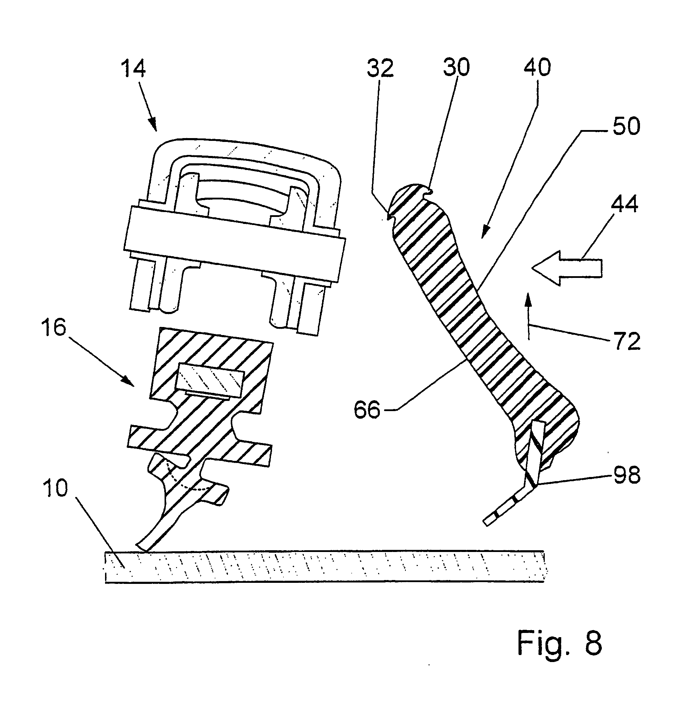

Die Windschaufel 40 in Fig. 8 besitzt Fangrinnen 30, 32 an der Vorderseite 50 und an der Innenseite 66 im oberen Bereich, auf der der Windschutzscheibe 10 abgewandten Seite. Die Fangrinnen 30, 32 werden anstatt von Vorsprüngen von Vertiefungen in der Oberfläche der Windschaufel 40 gebildet. Es können Standardwindschaufeln verwendet und nachträglich mit Fangrinnen 30, 32 versehen werden. Ferner kann die Windschaufel 40 besonders strömungsgünstig und durch weniger Materialaufwand leicht und kostengünstig ausgeführt werden.

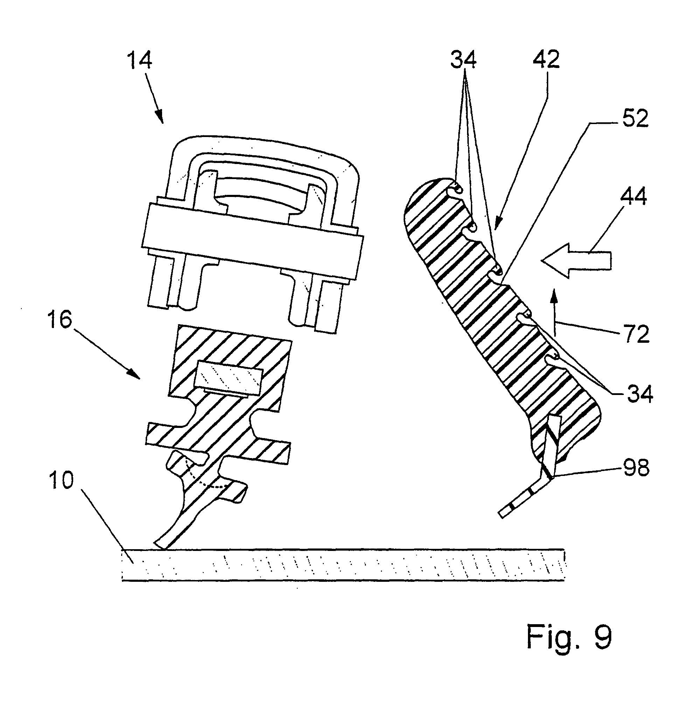

Anstatt nur eine größere Fangrinne 30 an der Windschaufel 40 an der Vorderseite 50 anzuordnen, können mehrere kleinere Fangrinnen 34 an der Vorderseite 52 in die Oberfläche der Windschaufel 42 eingebracht sein, wie in Fig. 9 dargestellt. Die in den Fig. 1-9 dargestellten Wischblätter mit den Fangrinnen 22, 24, 26, 28, 30, 32, 34, 74, 76, 78 stellen nur einen Ausschnitt der möglichen Varianten dar, wobei insbesondere die Fangrinnen 22, 24, 26, 28, 30, 32, 34, 74, 76, 78 an einer Windschaufel und/oder an einem Tragbügelsystem untereinander kombiniert angebracht werden können.

### Bezugszeichen

- 10: Windschutzscheibe
- 12: Tragbügelsystem
- 14: Tragbügelsystem
- 16: Wischleiste
- 18: Längsrichtung
- 20: Längsrichtung
- 22: Fangrinne
- 24: Fangrinne
- 26: Fangrinne
- 28: Fangrinne
- 30: Fangrinne
- 32: Fangrinne
- 34: Fangrinne
- 36: Windschaufel
- 38: Windschaufel
- 40: Windschaufel
- 42: Windschaufel
- 44: Fahrtwind
- 46: Vorderseite
- 48: Vorderseite
- 50: Vorderseite
- 52: Vorderseite
- 54: Befestigungselement
- 56: Befestigungselement
- 58: Befestigungselement
- 60: Befestigungselement
- 62: Innenseite
- 64: Innenseite
- 66: Innenseite
- 68: Kante
- 70: Hauptbügel
- 72: Richtung
- 74: Fangrinne
- 76: Fangrinne
- 78: Fangrinne
- 80: Richtung
- 82: Zwischenbügel
- 84: Zwischenbügel
- 86: Krallenbügel
- 88: Krallenbügel
- 90: Krallenbügel
- 92: Haltekrallen
- 94: Öffnung
- 96: Öffnung
- 98: Lippe
- 100: Hauptbügel
- 102: Zwischenbügel
- 104: Zwischenbügel
- 106: Krallenbügel
- 108: Krallenbügel
- 110: Krallenbügel
- 112: Haltekralle

## Patentansprüche

1. Wischblatt zum Reinigen von Scheiben (10) an Kraftfahrzeugen mit einer von einem Tragbügelsystem (12, 14) gehaltenen Wischleiste (16), **dadurch gekennzeichnet, daß** am Tragbügelsystem (12, 14) unmittelbar oder mittelbar mindestens eine in Längsrichtung (18, 20) ausgerichtete Fangrinne (22, 24, 26, 28, 30, 32, 34, 74, 76, 78) angeordnet ist, die Wasser nach außen aus einem Hauptsichtfeld leitet.

2. Wischblatt nach Anspruch 1, **dadurch gekennzeichnet, daß** die Fangrinne (24, 26, 28, 30, 32, 34) an einer am Tragbügelsystem (14) befestigten Windschaufel (36, 38, 40, 42) angeordnet ist.

3. Wischblatt nach Anspruch 2, **dadurch gekennzeichnet, daß** die Fangrinne (24, 28, 30, 34) auf einer dem Fahrtwind (44) zugewandten Vorderseite (46, 48, 50, 52) im oberen Bereich der Windschaufel (36, 38, 40, 42), auf der der Scheibe (10) abgewandten Seite angeordnet ist.

4. Wischblatt nach Anspruch 2 oder 3, **dadurch gekennzeichnet, daß** die Fangrinne (26) an einer dem Fahrtwind (44) abgewandten Innenseite (62) im unteren Bereich der Windschaufel (36), auf der der Scheibe (10) zugewandten Seite angeordnet ist.

5. Wischblatt nach einem der Ansprüche 2 bis 4, **dadurch gekennzeichnet, daß** die Fangrinne (28, 32) an der Innenseite (64, 66) im oberen Bereich der Windschaufel (38, 40), auf der der Scheibe (10) abgewandten Seite angeordnet ist.

6. Wischblatt nach einem der Ansprüche 2 bis 5, **dadurch gekennzeichnet, daß** die Fangrinne (28) an einer oberen Kante (68) der Windschaufel (38), auf der der Scheibe (10) abgewandten Seite angeordnet und in Richtung Tragbügelsystem (14) über die Innenseite (64) der Windschaufel (38) und in der vom Tragbügelsystem (14) abgewandten Richtung über die Vorderseite (48) der Windschaufel (38) ragt und Wasser von der Innenseite (64) und von der Vorderseite (48) nach außen leitet.

7. Wischblatt nach einem der vorhergehenden Ansprüche, **dadurch gekennzeichnet, daß** die Fangrinne (22, 24, 26, 30, 32, 34, 74, 76, 78) einstückig mit dem Tragbügelsystem (12) und/oder mit der Windschaufel (36, 40, 42) ausgeführt ist.

8. Wischblatt nach Anspruch 7, **dadurch gekennzeichnet, daß** die Fangrinne (30, 32, 34) durch eine Vertiefung in der Oberfläche der Windschaufel (40, 42) gebildet ist.

9. Wischblatt nach Anspruch 8, **dadurch gekennzeichnet, daß** mehrere Fangrinnen (34) in der Oberfläche der Vorderseite (52) der Windschaufel (42) eingebracht sind.

10. Wischblatt nach einem der vorhergehenden Ansprüche, **dadurch gekennzeichnet, daß** die Fangrinne (22, 24, 26, 28, 30, 32, 34, 74, 76, 78) in die von der Scheibe (10) abgewandten Richtung (72) oder in Richtung (80) der Scheibe (10) geschlossen ist.

## Claims

1. Wiper blade for cleaning windows (10) on motor vehicles, having a wiper strip (16) which is held by a supporting-bracket system (12, 14), **characterized in that** at least one drip channel (22, 24, 26, 28, 30, 32, 34, 74, 76, 78) which is orientated in the longitudinal direction (18, 20) is arranged directly or indirectly on the supporting-bracket system (12, 14) and conducts water to the outside out of a main field of view.

2. Wiper blade according to Claim 1, **characterized in that** the drip channel (24, 26, 28, 30, 32, 34) is arranged on a wind scoop (36, 38, 40, 42) which is fastened to the supporting-bracket system (14).

3. Wiper blade according to Claim 2, **characterized in that** the drip channel (24, 28, 30, 34) is arranged on a front side (46, 48, 50, 52), which faces the slipstream (44), in the upper region of the wind scoop (36, 38, 40, 42), on the side facing away from the window (10).

4. Wiper blade according to Claim 2 or 3, **characterized in that** the drip channel (26) is arranged on an inner side (62), which faces away from the slipstream (44), in the lower region of the wind scoop (36), on the side facing the window (10).

5. Wiper blade according to one of Claims 2 to 4, **characterized in that** the drip channel (28, 32) is arranged on the inner side (64, 66) in the upper region of the wind scoop (38, 40), on the side facing away from the window (10).

6. Wiper blade according to one of Claims 2 to 5, **characterized in that** the drip channel (28) is arranged on an upper edge (68) of the wind scoop (38), on the side facing away from the window (10), and, in the direction of the supporting-bracket system (14), protrudes over the inner side (64) of the wind scoop (38) and, in the direction facing away from the supporting-bracket system (14), protrudes over the front side (48) of the wind scoop (38), and conducts water to the outside from the inner side (64) and from the front side (48).

7. Wiper blade according to one of the preceding claims, **characterized in that** the drip channel (22, 24, 26, 30, 32, 34, 74, 76, 78) is designed integrally with the supporting-bracket system (12) and/or with the wind scoop (36, 40, 42).

8. Wiper blade according to Claim 7, **characterized in that** the drip channel (30, 32, 34) is formed by a depression in the surface of the wind scoop (40, 42).

9. Wiper blade according to Claim 8, **characterized in that** a plurality of drip channels (34) are placed in the surface of the front side (52) of the wind scoop (42).

10. Wiper blade according to one of the preceding claims, **characterized in that** the drip channel (22, 24, 26, 28, 30, 32, 34, 74, 76, 78) is closed in the direction (72) facing away from the window (10) or in the direction (80) of the window (10).

## Revendications

1. Balai d'essuie-glace pour nettoyer des vitres (10) de véhicules automobiles comprenant une lame d'essuyage (16) porté par un système de palonniers (12, 14),
**caractérisé en ce que**
le système de palonniers (12, 14) comporte directement ou indirectement au moins une goulotte de récupération (22, 24, 26, 28, 30, 32, 34, 74, 76, 78) alignée dans la direction longitudinale (18, 20), pour conduire l'eau vers l'extérieur au-delà du champ de vision principal.

2. Balai d'essuie-glace selon la revendication 1,
**caractérisé en ce que**
la goulotte de récupération (24, 26, 28, 30, 32, 34) est prévue sur une lame déflectrice (36, 38, 40, 42) fixée au système de palonniers (14).

3. Balai d'essuie-glace selon la revendication 2,
**caractérisé en ce que**
la goulotte de récupération (24, 28, 30, 34) est prévue sur la face avant (46, 48, 50, 52) tournée vers le vent de circulation (44) dans la zone supérieure de la lame déflectrice (36, 38, 40, 42), du côté opposé à celui tourné vers la vitre (10).

4. Balai d'essuie-glace selon la revendication 2 ou 3,
**caractérisé en ce que**
la goulotte de récupération (26) est prévue sur le côté intérieur (62), à l'opposé de celui tourné vers le vent de circulation (44), dans la zone inférieure de la lame déflectrice (36), du côté tourné vers la vitre (10).

5. Balai d'essuie-glace selon l'une des revendications 2 à 4,
**caractérisé en ce que**
la goulotte de récupération (28, 32) est prévue sur le côté intérieur (64, 66) dans la zone supérieure de la lame déflectrice (38, 40), du côté opposé à celui tourné vers la vitre (10).

6. Balai d'essuie-glace selon l'une des revendications 2 à 5,
**caractérisé en ce que**
la goulotte réceptrice (28) est prévue au niveau de l'arête supérieure (68) de la lame déflectrice (38), du côté non tourné vers la vitre (10), et dépasse en direction du système de palonniers (14), du côté intérieur (64) de la lame déflectrice (38), et dans la direction à l'opposé de celle du système de palonniers (14), dépasse au-delà de la face avant (48) de la lame déflectrice (38), pour conduire l'eau du côté intérieur (64) et du côté avant (48) vers l'extérieur.

7. Balai d'essuie-glace selon l'une des revendications précédentes,
**caractérisé en ce que**
la goulotte réceptrice (22, 24, 26, 30, 32, 34, 74, 76, 78) est réalisée en une seule pièce avec le système de palonniers (12) et/ou avec la lame déflectrice (36, 40, 42).

8. Balai d'essuie-glace selon la revendication 7,
**caractérisé en ce que**
la goulotte réceptrice (30, 32, 34) est formée par une rigidification de la surface supérieure de la lame déflectrice (40, 42).

9. Balai d'essuie-glace selon la revendication 8,
**caractérisé par**
plusieurs goulottes de récupération (34) prévues sur la surface supérieure de la face avant (52) de la lame déflectrice (42).

10. Balai d'essuie-glace selon l'une des revendication précédentes,
**caractérisé en ce que**
la goulotte de récupération (22, 24, 26, 28, 30, 32, 34, 74, 76, 78) est fermée dans la direction (72) à l'opposé de la vitre (10) ou dans la direction (80) de la vitre (10).
